# EUROPEAN PATENT APPLICATION

(11) **EP 3 689 681 A1**
(43) Date of publication of application: **05.08.2020**
(21) Application number: 19460007.8
(22) Date of filing: 29.01.2019
(51) Int. Cl.: B60Q 1/26

(54) **SYSTEM FOR SHAPING THE LIGHT STREAM IN CAR LAMPS**

(71) Applicant: Politechnika Slaska, 44-100 Gliwice (PL)
(72) Inventor: Holubowski, Waldemar, 41-408 Myslowice (PL); Sikora, Andrzej, 43-426 Katowice (PL); Zielonka, Adam, 44-240 Zory (PL)

(57) **Abstract**

System for modulating light stream in car lamps is disclosed, containing a light matrix with arbitrarily positioned light sources, microcontroller connected by pins to light matrix, to supply source and to at least one car light switch, this system is characterized by presence of at least one microcontroller (A) with built-in interface (D) or microcontroller (A) which is connected to interface (D) via at least one pin (25-26), where each light source (36) of matrix (B) is equipped with at least two pins, one pin (35) is connected to car supply terminal (37), and the other pin (34) of each light source (34) of matrix (B) is connected via current limiter (33) to one pin of microcontroller (A). Light-emitting diodes are the preferred embodiment of light sources in matrix (B).

Car lamp switch (29-32) is braking light sensor and/or position light switch and/or direction indicator light switch and/or fog light switch.

## Description

The present invention relates to system for modulating light stream in car lamps.

Car lamps using different light sources are known from the prior art, wherein light stream is formed by arrangement of light sources in a lamp. Such design does not enable the user to change the shape of light stream (projected image seen by the observers) during entire lamp operation time, it is limited strictly to manufacturer's settings.

Car lamp is an element of vehicle lighting system and it fulfils different functions: it ensures that vehicle is visible, signals braking, indicates change in direction of car movement and keeps the road in front of moving vehicle illuminated. The lamp may be equipped with single or multiple light sources and the emitted light stream must fulfil the homologation requirements. In prior designs light sources are switched on simultaneously. There are some other direction indicators consisting of numerous light sources, where these sources are switched on sequentially, indicating the direction of proposed turn (examples of selected models from Audi, VW and Toyota manufacturers are known).

Inventions with lamps containing multiple light sources built on the basis of light-emitting diode strips are known from prior art.

In Chinese invention No. CN101377271 LED strip lights are used, strip is placed inside a hollow belt with electrical connection provided.

Another Chinese invention CN201028348 relates to a LED strip light composed of LED units with different lighting configurations of nine series of numerous single light points, this produces blinking and decorative colour effects.

Chinese utility pattern CN201170462 shows that digital lamps containing light-emitting diodes may be placed upon elastic tape, single tape holds at least one LED, and one end of the tape is connected to supply source.

Polish patent application P.389739 relates to design and manufacture of lamp equipped with multiple LEDs.

Polish utility pattern PL 120052 relates to lighting set, which may be used for illuminating information or warning traffic signs. Lighting set contains elastic element conducting current, this element is joined to lighting electronic subassemblies located one beside the other and mounted on two elastic and isolated supply wires.

Polish patent PL 225 261 B1 is characterized by the fact, that LED strip is composed of repeatable tape modules, joined sequentially in such a way that glowing LEDs produce an arbitrary shape of any geometric figure and, simultaneously or interchangeably any ASCII sign or a combination of ASCII signs, while a bundle of connecting wires composed of wire pairs is formed into ready-made prefabricated cable modules producing at least one closed electrical loop. The presence of electronic controller makes it possible to switch the electrical circuits composed of segmented LED strips in time and, simultaneously or interchangeably, to supply voltage to different strip segments in a selective way.

The aforementioned inventions and applications do not allow the user to change autonomously the displayed image and its intensity, these characteristics are set by the manufacturer. Different patterns at the display (matrix) are obtained by using numerous electrical circuits and selecting a proper one in a way designed and set in lamp manufacture process.

The core inventive advance is a system for modulating light stream in a car lamp, containing a light matrix with arbitrarily placed light sources, microcontroller connected by pins to light matrix, to supply source and to at least one car light switch and characterized by having at least one microcontroller with built-in interface or connected to the interface via at least one pin, where each light source of the matrix is equipped with at least two pins, one pin is connected to the supply terminal of the car, while the second pin of each matrix light source is connected via current limiter to one microcontroller pin. Light-emitting diodes are the preferred embodiment of light sources in the matrix.

Car light switch is a braking light sensor and/or position light switch and/or direction indicator light switch and/or fog light switch. Matrix is made up of a printed circuit board. Current limiter consists of a resistor or a dedicated electronic circuit. The preferred embodiment of the interface is a Bluetooth module. The preferred embodiment of the interface is a USB connection.

Compared with the prior art, present invention differs in design which allows the user to choose any number of light sources with controlled intensity so that the emitted light stream may fulfil homologation demands. The selection of arbitrary light sources makes it possible to obtain a unique light stream (lamp image). Due to this solution it is possible to change the selection of glowing light sources and their intensity by the user, to sequentially switch on light sources and to change their intensity. The proposed design allows the user to change the displayed pattern (image) of the used lamp at any time in accordance with his individual preferments without need for changing the operating lamp or electrical connections.

System described in the invention allows the user to control fully the image obtained in the display, dynamic control is also possible and any pattern with any light intensity may be attained. This may be achieved without replacing the lamp during lamp entire operating period.

System for modulating light stream in car lamps is used for position lights, braking lights, direction indicator lights.

This system ensures independent control of every diode.

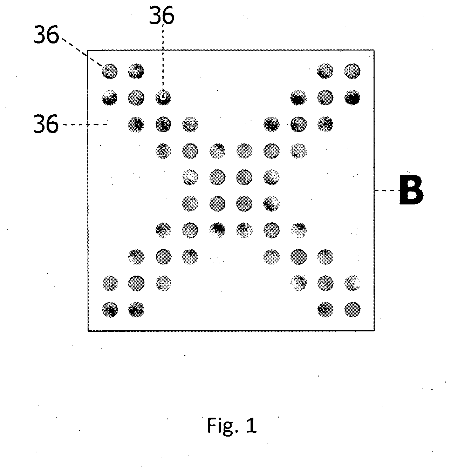

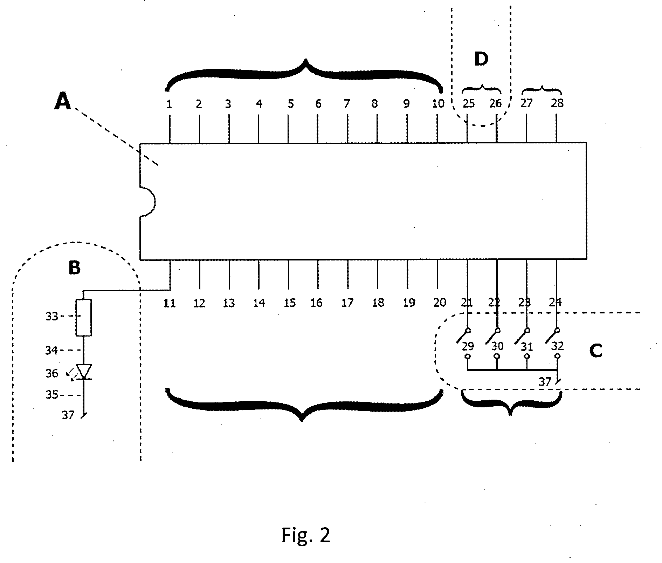

System is shown with reference to figure, where Figure 1 shows matrix with light sources, Figure 2 illustrates scheme of the system as described in invention.

An embodiment is described by way of example.

The matrix may be worked out in any shape set by user (rectangle, circle, ellipse, triangle or other), its surface may also be curved. In this embodiment matrix (B) is a surface with light-emitting diodes (36) mounted, 100 diodes are used (36), they are placed upon a flat square surface executed in the form of printed-circuit board and they are evenly spaced.

Saturation of grey colour in the figure corresponds to intensity of light sources, that is diodes (36). Diodes (36) are soldered to printed circuit board. One pin (35) of each diode (36) is connected to minus terminal of a car (37), and the other pin (34) is connected via resistor (33) to one pin (11) of microcontroller (A), which makes it possible to control independently each diode (36). Resistor (33) limits maximum current supplied to diode (36), so that it does not become damaged. Microcontroller (A) is connected by 20 pins (1-20) to 20 diodes (36) of matrix (B), which forms a light stream in such a way, that each diode (36) is supplied by one output pin (1-20) of microcontroller (A). Two pins (27,28) of microcontroller (A) connect microcontroller (A) to the supply source, this is a car battery. Alternator may constitute another supply source.

Pins (25, 26) of microcontroller (A) are connected to interface (D), in implementation described herein this is a Bluetooth module. Pins (25,26) transmit to microcontroller (A) memory information as to which diodes (36) are operating by programming microcontroller (A), this is equivalent with recording the truth table of the diodes (36) selected for lighting by user.

Pins (21-24) of microcontroller (A) are connected to wires of control module (C), which contains light switches, they receive information from module (C) relating to turning on appropriate light source (29-32), a single pin is connected to proper one light source: pin (21) is connected to braking light switch (29), pin (22) is connected to direction indicator light switch (30), pin (23) is connected to position light switch (31), pin (24) is connected to fog light switch (32), one pin (21-24) corresponds to appropriate light source.

Microcontroller (A) which is connected via output pins (1-20) to 20 diodes (36) makes the diodes (36) light up, intensity of their light is related to microcontroller (A) set average voltage value and diodes create a pattern displayed by the lamp. Microcontroller (A) ensures intensity of diode (36) light.

Average value of output voltage for each diode (36) is controlled by modulating the pulse width, that is ratio of time interval when diode (36) is turned on to the time interval when diode is turned off over a given time interval.

The system according to the invention in the implementation described herein contains 5 microcontrollers (A), each microcontroller is connected via 20 pins (1-20) to 20 diodes (36) of matrix (B), so that 5 microcontrollers (A) are connected to total of 100 diodes of matrix (B). Thus, each microcontroller (A) controls consecutive 20 diodes of matrix (B). Each microcontroller (A) is connected via one of four pins (21-24) to one light switch of control module (C), via two pins (25-26) to interface (D) and via two pins (27-28) to supply source. With reference to embodiment, connection scheme for one microcontroller is shown in the figure. Microcontroller (A) is connected to interface (D), which during lamp operation makes it possible to transmit to microcontroller (A) memory truth tables selected for turning on light diodes (36), to transmit modified tables and thus change the set control of output pins (1-20) supplying diodes (36), which in turn allows microcontroller (A) to change the patterns displayed by the lamp. The truth table relates to the shape and intensity of image displayed by diodes (36), which is stored in microcontroller memory.

Interface (D) transmits information to microcontroller (A) memory, which diode should glow and how intensively, i.e. information on truth table, which makes it possible to change the shape of displayed image and its intensity, this allows the user to change the selection of operating light sources and to switch the light sources sequentially.

In this embodiment interface (D) is composed of Bluetooth module and electrical wires connected to microcontroller (A). Bluetooth module makes it possible to program microcontrollers (A) (to store truth table in microcontroller memory), thereby allowing the user to change microcontroller (A) memory record at any time and thus achieve the expected final visual effect. User sends information on the pattern (truth table) to microcontroller (A) memory via Bluetooth module using dedicated laptop software or a smartphone application.

In other embodiment interface is composed of USB connection and electrical wires leading to microcontroller. The user may program patterns and dynamic sequences of displayed image using computer connected via USB connection, dedicated software installed in laptop or a smartphone application.

In other embodiment multi-coloured diodes (e.g. bicoloured) may be used, in such case microcontrollers are equipped with additional pins in order to process added colours.

## Claims

1. System for modulating light stream in car lamp, containing a light matrix with arbitrarily placed light sources, microcontroller connected by pins to light matrix, to supply source and to at least one car light switch, **characterized in that** it contains at least one microcontroller (A) with built-in interface (D) or which is connected to interface (D) by at least one pin (25-26), and each light source (36) of matrix (B) is equipped with at least two pins, one pin (35) is connected to the supply terminal of the car (37), while the second pin (34) of each light source (36) of matrix (B) is connected via current limiter (33) to one pin of microcontroller (A).

2. System as claimed in claim 1, wherein light-emitting diodes are preferred embodiment of light sources.

3. System as claimed in claim 1, wherein car light switch (29-32) is a braking light sensor and/or position light switch and/or direction indicator light switch and/or fog light switch.

4. System as claimed in claim 1, wherein matrix (B) is made up of a printed-circuit board.

5. System as claimed in claim 1, wherein current limiter (33) is a resistor.

6. System as claimed in claim 1, wherein current limiter (33) is a dedicated electronic circuit.

7. System as claimed in claim 1, wherein preferred embodiment of interface (D) is a Bluetooth module.

8. System as claimed in claim 1, wherein preferred embodiment of interface (D) is a USB connection.
